# EUROPÄISCHE PATENTSCHRIFT

(11) **EP 1 417 088 B1**
(45) Veröffentlichungstag und Bekanntmachung des Hinweises auf die Patenterteilung: **22.12.2004**
(21) Anmeldenummer: 02791427.4
(22) Anmeldetag: 01.08.2002
(51) Int. Cl.: B29C 57/02, B29C 57/10, F16L 47/06

(54) **VERFAHREN ZUM HERSTELLEN EINER ROHRENDMUFFE AUS THERMOPLASTISCHEM KUNSTSTOFF**
METHOD FOR PRODUCING A PIPE TERMINATION BOX FROM THERMOPLASTIC MATERIAL
PROCEDE DE PRODUCTION D'UN MANCHON D'ACCOUPLEMENT DE TUBE EN MATIERE THERMOPLASTIQUE

(30) Priorität: 02.08.2001 AT 12022001
(43) Veröffentlichungstag der Anmeldung: 12.05.2004
(73) Patentinhaber: Schnallinger, Helmuth Michael, 4382 Sarmingstein 46 (AT)
(72) Erfinder: Schnallinger, Helmuth Michael, 4382 Sarmingstein 46 (AT)
(74) Vertreter: Hübscher, Helmut, Dipl.-Ing.
(86) Internationale Anmeldenummer: PCT/AT2002/000230
(87) Internationale Veröffentlichungsnummer: WO 2003/011571

(56) Entgegenhaltungen:
- WO-A-96/22184
- WO-A-98/21518
- US-A- 4 457 886

## Beschreibung

### Technisches Gebiet

Die Erfindung bezieht sich auf ein Verfahren zum Herstellen einer Rohrendmuffe aus thermoplastischem Kunststoff mit einem auf der Muffeninnenseite in eine Umfangssicke formschlüssig eingreifenden, einen Dichtungsteil und einen Stützteil aufweisenden Dichtungsring, wobei der Dichtungsring in einen vorgeformten Sickenbereich eingebracht und dann durch eine Endformung des vorgeformten Sickenbereiches in der Umfangssicke formschlüssig festgehalten wird.

### Stand der Technik

Um beim Einführen eines Rohrendes in eine Rohrendmuffe eines anschließenden Rohres eine wasserdichte Verbindung zu erhalten, wird auf der Innenseite der Rohrendmuffe eine Ringdichtung vorgesehen, die in eine Umfangssicke formschlüssig eingreift. Zum sicheren Halt der Ringdichtung in der Umfangssicke besteht der Dichtungsring neben dem eigentlichen Dichtungsteil aus einem Stützteil, der eine ein Austreten des Dichtungsringes aus der Umfangssicke ermöglichendes Verformen des Dichtungsringes unterbindet. Der Stützteil kann dabei als vom Dichtungsteil gesonderter, zwischen zwei Schenkel des im Querschnitt U-förmigen Dichtungsteils eingreifender Stützring ausgebildet sein (EP 0 124 678 A) oder in axialer Richtung an den Dichtungsteil angeformt werden (EP 0 243 331 A2). Damit der Dichtungsring trotz seiner geringen Verformbarkeit formschlüssig in einer Umfangssicke der Rohrendmuffe aufgenommen werden kann, wird der Dichtungsring auf einen Dorn aufgezogen und mit dem Dorn in die aus thermoplastischem Kunststoff bestehende Rohrendmuffe eingepreßt, die zu diesem Zweck über den Erweichungspunkt erwärmt wird. Wird dabei der Dichtungsring mit dem Stützteil voran in die Rohrendmuffe eingeführt, so kann der zu diesem Zweck konisch ausgebildete Stützteil als Formwerkzeug zum Aufweiten der erweichten Rohrendmuffe dienen. Da sich der aufgeweitete Muffenabschnitt beim Abkühlen wieder zusammenzieht, bildet sich um den Dichtungsring eine ihn formschlüssig festhaltende Umfangssicke aus, so daß der Dom nach der abkühlungsbedingten Verfestigung der Rohrendmuffe lediglich aus der Rohrendmuffe herausgezogen werden muß, und zwar unter einem Abstreifen der in der Umfangssicke festgehaltene Dichtungsring vom Dorn. Die Fertigungstoleranzen sind dabei erheblich, was dazu geführt hat (EP 0 685 317 A1), die Umfangssicke teilweise vorzuformen, indem das Rohr mit dem Rohrmuffenende von innen mit Druckgas beaufschlagt und in eine Hohlform gepreßt wird. Da das Muffenende dabei auf der Einführseite des Dichtungsringes auf dessen größten Durchmesser aufgeweitet werden muß, bevor der auf einem Dom aufgezogene Dichtungsring mit dem Dom in die Muffe eingeführt werden kann, muß der aufgeweitete Muffenabschnitt wieder durch eine Wärmebehandlung auf den Dorndurchmesser geschrumpft werden, um den Dichtungsring auf der dem offenen Muffenende zugekehrten Seite durch die Umfangssicke formschlüssig zu übergreifen. Damit können aber die Fertigungstoleranzen nicht entscheidend verbessert werden, was gerade im Dichtungsbereich von erheblicher Bedeutung ist.

### Darstellung der Erfindung

Der Erfindung liegt somit die Aufgabe zugrunde, ein Verfahren zum Herstellen einer Rohrendmuffe aus thermoplastischem Kunststoff der eingangs geschilderten Art so auszugestalten, daß mit einem vergleichsweise geringen Aufwand geringe Fertigungstoleranzen insbesondere im Bereich des Dichtungsringes sichergestellt werden können.

Die Erfindung löst die gestellte Aufgabe dadurch, daß die Rohrendmuffe mit der Umfangssicke bei einer zumindest der Erweichungstemperatur entsprechenden Verformungstemperatur mit einem ein Einlegen des Dichtungsringes ermöglichenden Übermaß vorgeformt und nach dem Abkühlen unter die Erweichungstemperatur bei eingelegtem Dichtungsring unter Berücksichtigung eines kühlungsbedingten Schrumpfens in die Endform zusammengepreßt wird.

Durch das Vorformen der Rohrendmuffe und der Umfangssicke mit einem ein Einlegen des Dichtungsringes ermöglichenden Übermaß braucht der Endabschnitt der Muffe zwischen der Umfangssicke und dem stirnseitigen Muffenrand nicht entsprechend dem größten Durchmesser des Dichtungsringes aufgeweitet zu werden, wenn der Dichtungsring nicht auf einen Dorn aufgezogen, sondern unter einer geringfügigen Verformung in einer Neigungslage gegenüber der Muffenachse in die Muffe eingeführt wird, bis er in die vorgeformte Umfangssicke eingreift. Nach dem Einbringen des Dichtungsringes in die Muffe wird die Rohrendmuffe mit der Umfangssicke auf die Endform zusammengepreßt, wobei der bekannte Umstand vorteilhaft ausgenützt werden kann (EP 0 666 790 B1), daß durch ein Zusammenpressen einer nach einem Erwärmen auf eine Erweichungstemperatur aufgeweiteten Muffe nach deren Abkühlung unter die Erweichungstemperatur ein nachträgliches Schwinden unterbunden und somit eine geringe Fertigungstoleranz gewährleistet werden kann. Berücksichtigt man beim Zusammenpressen der Rohrendmuffe auf ihre Endform das abkühlungsbedingte Schrumpfverhalten, so kann auch unter Bedingungen einer Serienfertigung eine hohe Maßhaltigkeit für die Rohrendmuffen mit eingelegten Dichtungsringen gewährleistet werden.

Aufgrund des dornlosen Einführens der Dichtungsringe in die mit Übermaß vorgeformten Rohrendmuffen braucht hinsichtlich der Ausführung der Dichtungsringe keine Rücksicht auf die Art der Formung der Umfangssicken genommen zu werden. Es kann daher beispielsweise der in an sich bekannter Weise aus axial aneinander anschließenden Dichtungs- und Stützteilen geformte Dichtungsring mit dem Dichtungsteil voran in die Umfangssicke eingelegt werden, so daß der härtere Stützteil gegen das offene Muffenende weist und mit einem nach innen vorstehenden Abstreifer versehen werden kann, der beim Einführen eines anzuschließenden Rohres in die Rohrendmuffe gegebenenfalls am eingeschobenen Rohrende anhaftende Schmutzansätze abschert, so daß die Anlage des Dichtungsteils des Dichtungsringes am Rohr nicht durch Ansätze von Verunreinigungen beeinträchtigt werden kann.

Es lassen sich aber auch zweiteilige Dichtungsringe einsetzen, bei denen der Stützteil zwischen zwei Schenkeln des im Querschnitt U-förmigen Dichtungsteils eingreift, weil in diesem Fall beim Zusammenpressen der Rohrmuffe die beiden Schenkel des Dichtungsteils axial gegen den Stützteil zusammengedrückt werden können, um den Dichtungsring in der Umfangssicke unter einer Vorspannung aufzunehmen.

### Kurze Beschreibung der Zeichnung

Anhand der Zeichnung wird das erfindungsgemäße Verfahren näher erläutert.

Es zeigen
- Fig. 1: eine erfindungsgemäß ausgebildete Rohrendmuffe mit einem in die Muffe eingeführten Anschlußrohr in einem schematischen Axialschnitt,
- Fig. 2: die mit Übermaß vorgeformte Rohrendmuffe im Bereich der Umfangssicke mit eingelegtem Dichtungsring ausschnittsweise in einem Axialschnitt in größerem Maßstab,
- Fig. 3: die vorgeformte Rohrendmuffe entsprechend der Fig. 2 nach dem Zusammenpressen in die Endform,
- Fig. 4: eine der Fig. 2 entsprechende Darstellung einer vorgeformten Rohrendmuffe beim Einsatz eines zweiteiligen Dichtungsringes und
- Fig. 5: die Rohrendmuffe gemäß der Fig. 4 nach dem Zusammenpressen auf die Endform.

### Weg zur Ausführung der Erfindung

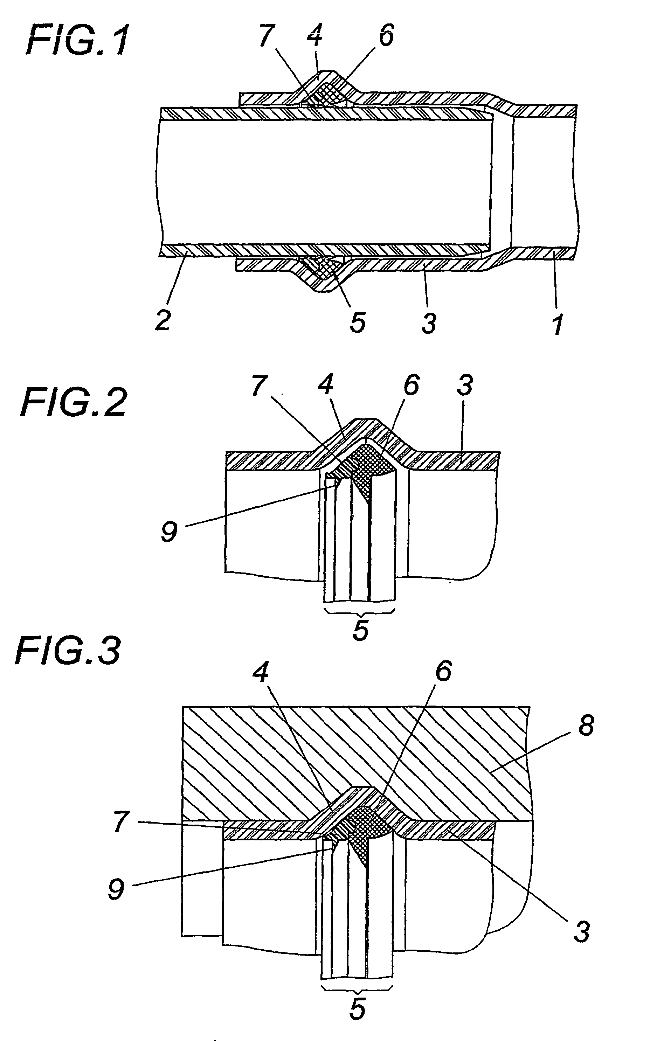

Wie der Fig. 1 entnommen werden kann, weist eines der beiden wasserdicht zu verbindenden Rohre 1 und 2 eine Rohrendmuffe 3 mit einer Umfangssicke 4 auf, in die ein Dichtungsring 5 formschlüssig eingesetzt ist. Dieser Dichtungsring 5 setzt sich aus einem gummielastischen Dichtungsteil 6 und einem Stützteil 7 zusammen, der ausreichend formstabil ist, um ein Austreten des Dichtungsringes 5 aus der Umfangssicke 4 zu vermeiden. Wird nun das freie Ende des Rohres 2 in die Rohrendmuffe 3 des Rohres 1 eingeführt, so legt sich der Dichtungsring 5 unter einer entsprechenden Vorspannung des Dichtungsteiles 6 dichtend an den Außenmantel des Rohres 2 an, so daß zur Abdichtung der Rohr-Muffenverbindung keine weiteren Maßnahmen erforderlich sind.

Die Dichtwirkung ist allerdings von den Fertigungstoleranzen abhängig. Um eine hohe Maßhaltigkeit mit einer einfachen Herstellung zu verknüpfen, wird der Dichtungsring 5 nicht mit Hilfe eines Domes in die Rohrendmuffe 3 eingeführt, die zu diesem Zweck entsprechend aufgeweitet werden müßte, sondern in die mit einem Übermaß vorgefertigte Rohrendmuffe unter einer geringfügigen Verformung eingelegt, wobei der Dichtungsring 5 eine zur Muffenachse geneigte Einführlage einnimmt. Im Bereich der ebenfalls mit einem entsprechenden Übermaß vorgeformten Umfangssicke 4 entspannt sich der für das Einführen geringfügig verformte Dichtungsring 5 und nimmt seine ursprüngliche Rundform an. Die für sein Einführen erforderliche Verformung des Dichtungsringes 5 ist deshalb einfach, weil das mit dem Zusammendrücken in der einen Richtung erforderliche Strecken in der dazu senkrechten Richtung nicht durch die Rohrendmuffe 3 oder die Umfangssicke 4 behindert wird. Die mit der Umfangssicke 4 in herkömmlicher Weise bei einer entsprechenden Verformungstemperatur vorgeformte Rohrendmuffe 3 wird dann mit Hilfe von um den Umfang verteilten Preßwerkzeugen 8 vom vorgefertigten Übermaß gemäß der Fig. 2 auf die Endform nach der Fig. 3 zusammengepreßt, wobei der Dichtungsring 5 von der Umfangssicke 4 formschlüssig umschlossen wird. Da dieses Zusammenpressen der Rohrendmuffe 3 in die vorgegebene Endform nach einer Abkühlung der zur Vorformung über den Erweichungspunkt erwärmten Rohrendmuffe 3 unter die Erweichungstemperatur durchgeführt wird, wird die Endform ohne alterungsbedingtes Schrumpfen dauerhaft sichergestellt, so daß unter Berücksichtigung eines abkühlungsbedingten Schrumpfens sehr enge Fertigungstoleranzen gewährleistet werden können.

Wegen der Vorformung der Rohrendmuffe 3 und der Umfangssicke 4 mit Übermaß braucht der Dichtungsring 5 lediglich an die Querschnittsform der Umfangssicke 4 angepaßt zu werden, kann aber hinsichtlich seines Aufbaus von der Fertigung der Umfangssicke unabhängig gestaltet werden, weil es ja lediglich darum geht, eine für das gegebene Übermaß ausreichende Verformung durch ein seitliches Zusammendrücken auf einander diametral gegenüberliegenden Seiten zu ermöglichen, um den dabei oval verformten Dichtungsring 5 in einer Schräglage gegenüber der Muffenachse in die Umfangssicke 4 einzuführen. Es ist daher gemäß den Fig. 2 und 3 durchaus möglich, den an den Dichtungsteil 6 axial angeformten Stützteil 7 auf der der Muffenöffnung zugekehrten Ringseite vorzusehen und mit einem nach innen vorstehenden, lippenartigen Abstreifer 9 zu versehen, der beim Einführen eines Anschlußrohres 2 in die Rohrendmuffe 3 gegebenenfalls vorhandene Schmutzansammlungen am Außenmantel des Anschlußrohres 2 abschert, so daß sich der Dichtungsteil 6 unbeeinträchtigt von solchen Verschmutzungen dichtend an den Außenmantel des Rohres 2 anlegen kann.

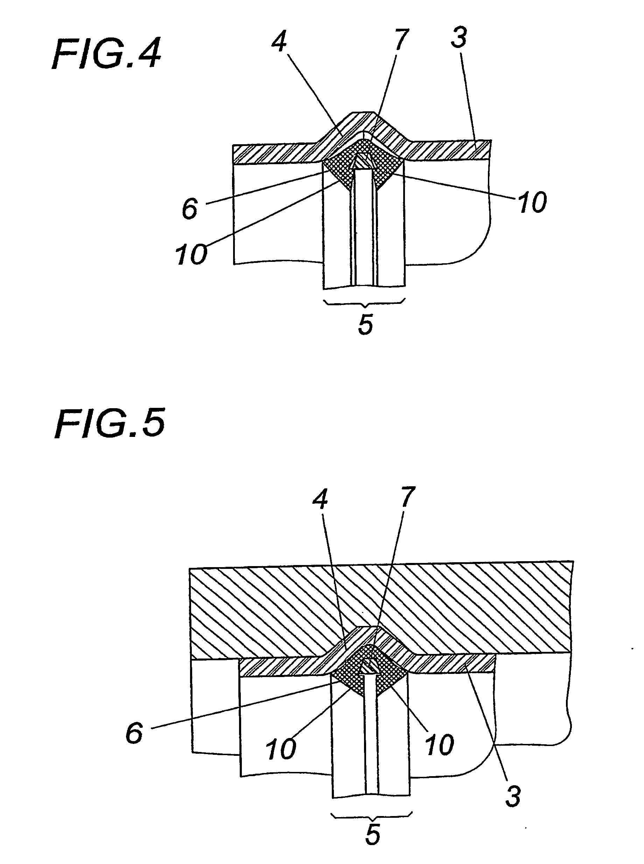

In den Fig. 4 und 5 ist ein zweiteiliger Dichtungsring 5 dargestellt, der aus einem im Querschnitt U-förmigen Dichtungsteil 6 mit zwei Schenkeln 10 besteht, die zwischen sich den Stützteil 7 in Form eines Stützringes aufnehmen. Aufgrund der Ausbildung der Schenkel 10 des Dichtungsteiles 6 können auf den Dichtungsteil 6 beim Zusammendrücken der Rohrendmuffe 3 in die Endform durch ein entsprechendes Preßwerkzeug 8 über die Wände der Umfangssicke 4 axiale Druckkräfte ausgeübt werden, die die Halterung des Stützteils 7 zwischen den Schenkeln 10 unter einer Vorspannung sicherstellen, wie dies der Fig. 5 im Vergleich mit der Fig. 4 entnommen werden kann.

## Patentansprüche

1. Verfahren zum Herstellen einer Rohrendmuffe (3) aus thermoplastischem Kunststoff mit einem auf der Muffeninnenseite in eine Umfangssicke (4) formschlüssig eingreifenden, einen Dichtungsteil (6) und einen Stützteil (7) aufweisenden Dichtungsring (5), wobei der Dichtungsring in einen vorgeformten Sickenbereich eingebracht und dann durch eine Endformung des vorgeformten Sickenbereiches in der Umfangssicke (4) formschlüssig festgehalten wird, wobei die Rohrendmuffe mit der Umfangssicke bei einer zumindest der Erweichungstemperatur entsprechenden Verformungstemperatur mit einem ein Einlegen des Dichtungsringes (5) ermöglichenden Übermaß vorgeformt und nach dem Abkühlen unter die Erweichungstemperatur bei eingelegtem Dichtungsring unter Berücksichtigung eines kühlungsbedingten Schrumpfens in die Endform zusammengepreßt wird.

2. Verfahren nach Anspruch 1, **dadurch gekennzeichnet, daß** der in an sich bekannter Weise aus axial aneinander anschließenden Dichtungs- und Stützteilen (6, 7) geformten Dichtungsring (5) mit dem Dichtungsteil (6) voran in die Umfangssikke (4) eingelegt wird, wobei der gegen das offene Muffenende weisende Stützteil einen nach innen vorstehenden Abstreifer (9) bildet.

3. Verfahren nach Anspruch 1, **dadurch gekennzeichnet daß** der in an sich bekannter Weise den Stützteil (7) zwischen zwei Schenkeln (10) aufnehmende, im Querschnitt U-förmige Dichtungsteil des Dichtungsringes beim Zusammenpressen der Rohrmuffe axial zusammengedrückt wird.

## Claims

1. A method of making a connection between a thermoplastic pipe end socket (3) and a sealing ring (5) which on the socket inside engages positively in a peripheral corrugation (4) and which comprises a sealing part (6) and a support part (7), the sealing ring being introduced into a preformed corrugation zone and then being positively held fast in the peripheral corrugation (4) by end forming of the preformed corrugation zone, wherein the pipe end socket is preformed with the peripheral corrugation at a deformation temperature corresponding at least to the softening temperature, the preforming being effected with an over-size which allows the sealing ring (5) to be inserted, and after cooling below the softening temperature, with the sealing ring inserted, the pipe end socket is compressed into the final shape, allowance being made for cooling-dependent shrinkage.

2. A method according to claim 1, **characterised in that** the sealing ring (5) formed in manner known per se from the axially adjoining sealing and support parts (6, 7) is inserted into the peripheral corrugation (4) with the sealing part (6) at the front, the support part, which points towards the open socket end, forming an inwardly projecting stripper (9).

3. A method according to claim 1, **characterised in that** the sealing ring sealing part of U-shaped cross-section, which in manner known per se accommodates the support part (7) between two limbs (10), is axially compressed on compression of the pipe socket.

## Revendications

1. Procédé de fabrication d'un manchon d'accouplement de tube (3) en matière synthétique thermoplastique, avec une bague d'étanchéité (5), s'engageant du côté intérieur du manchon, par une liaison à ajustement de forme, dans une moulure périphérique (4) et présentant une partie d'étanchéité (6) et une partie d'appui (7), la bague d'étanchéité étant introduite dans une zone de moulure préformée puis fixée, par une liaison à ajustement de forme, dans la moulure périphérique (4) par formage final épousant la forme de la zone de moulure préformée, où le manchon d'accouplement de tube avec la moulure périphérique est préformé à une température de déformation correspondant au moins à la température d'amollissement, avec un surdimensionnement permettant une insertion de la bague d'étanchéité (5), et comprimé à la forme finale, après refroidissement à une température inférieure à la température d'amollissement, alors que la bague d'étanchéité est insérée, en prenant en considération un retrait provenant du refroidissement.

2. Procédé selon la revendication 1, **caractérisé en ce que** la bague d'étanchéité (5), formée, de manière connue en soi, de parties d'étanchéité et d'appui (6, 7) se raccordant axialement les unes aux autres, avec la partie d'étanchéité (6), est préalablement insérée dans la moulure périphérique (4), la partie d'appui, tournée vers l'extrémité du manchon ouverte, formant alors un racleur (9) en saillie intérieurement.

3. Procédé selon la revendication 1, **caractérisé en ce que** la partie d'étanchéité à section transversale en forme de U, recevant, de manière connue en soi, la partie d'appui (7) entre deux branches (10), de la bague d'étanchéité, est comprimée axialement lors de l'assemblage avec pressage du manchon tubulaire.
